(19) Europäisches Patentamt
European Patent Office
Office européen des brevets

(11) EP 4 349 907 A1

(12) **EUROPEAN PATENT APPLICATION**

(43) Date of publication:
**10.04.2024 Bulletin 2024/15**

(21) Application number: **23197979.0**

(22) Date of filing: **18.09.2023**

(51) International Patent Classification (IPC):
***C08L 15/00*** *(2006.01)* ***C08L 7/00*** *(2006.01)*
***C08L 93/04*** *(2006.01)* ***C08K 5/55*** *(2006.01)*

(52) Cooperative Patent Classification (CPC):
(C-Sets available)
**C08L 15/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 JP 2022162404**

(71) Applicant: **Sumitomo Rubber Industries, Ltd.**
**Kobe-shi, Hyogo 651-0072 (JP)**

(72) Inventor: **JIANG, Lan**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **RUBBER COMPOSITION AND TIRE**

(57) Provided are a rubber composition and a tire that exhibit a reversible change with water in the physical properties. The rubber composition contains: boron; a rubber component; and a filler, and satisfies the following relationships (1) and (2):

$$(1)\ Fc > 40$$

wherein Fc refers to a filler content (parts by mass) per 100 parts by mass of the rubber component, (2) tan δ when wet with water/tan δ when dry > 1.00 wherein tan δ refers to a loss tangent measured at a temperature of 30°C, an initial strain of 10%, a dynamic strain of 2%, and a frequency of 10 Hz in an elongation mode.

EP 4 349 907 A1

(52) Cooperative Patent Classification (CPC): (Cont.)

C-Sets
**C08L 15/00, C08L 7/00, C08L 91/00, C08L 93/04, C08L 9/00, C08L 91/06, C08K 3/04, C08K 3/36, C08K 5/548, C08K 3/22, C08K 5/18, C08K 3/06, C08K 5/47, C08K 5/31;**
**C08L 15/00, C08L 93/04, C08K 3/22, C08K 3/06, C08K 5/47, C08K 5/31, C08K 3/36, C08K 5/548**

## Description

TECHNICAL FIELD

The present invention relates to rubber compositions and tires.

BACKGROUND ART

A variety of polymers are used in products such as tires. The polymers are expected to impart various performances.

SUMMARY OF INVENTION

TECHNICAL PROBLEM

The present invention aims to solve the above issue and to provide rubber compositions and tires that exhibit a reversible change with water in the physical properties.

SOLUTION TO PROBLEM

The present invention relates to a rubber composition, containing: boron; a rubber component; and a filler, the rubber composition satisfying the following relationships (1) and (2):

(1) Fc > 40
wherein Fc refers to a filler content (parts by mass) per 100 parts by mass of the rubber component,
(2) tan δ when wet with water/tan δ when dry > 1.00 wherein tan δ refers to a loss tangent measured at a temperature of 30°C, an initial strain of 10%, a dynamic strain of 20, and a frequency of 10 Hz in an elongation mode.

ADVANTAGEOUS EFFECTS OF INVENTION

The rubber composition of the present invention contains boron, a rubber component, and a filler, and satisfies the relationships (1) and (2). The present invention can provide the rubber composition that exhibits a reversible change with water in the physical properties.

BRIEF DESCRIPTION OF DRAWINGS

FIG. 1 shows an exemplary synthetic example of a phenylboronic acid compound represented by formula (i).
FIG. 2 shows an exemplary $^1$H-NMR spectrum of a synthetic product.
FIG. 3 shows an exemplary synthetic example depicting a route to synthesize a modified resin by reacting a phenylboronic acid compound with a resin.
FIG. 4 shows an exemplary IR spectrum of a modified resin A.

DESCRIPTION OF EMBODIMENTS

<Rubber composition>

The rubber composition of the present invention contains: boron; a rubber component; and a filler, and satisfies the following relationships (1) and (2):

(1) Fc > 40
wherein Fc refers to a filler content (parts by mass) per 100 parts by mass of the rubber component,
(2) tan δ when wet with water/tan δ when dry > 1.00 wherein tan δ refers to a loss tangent measured at a temperature of 30°C, an initial strain of 10%, a dynamic strain of 20, and a frequency of 10 Hz in an elongation mode.

The reason why the above-described effect can be obtained is not completely clear, but it may be attributed to the following mechanism.

When a boron-containing boronic acid, for example, is added to a rubber composition having a filler content, Fc, of higher than 40 parts by mass, the boronic acid forms boroxine through trimerization in a dry state, and the boroxine is decomposed with water, whereby the rubber composition exhibits reversibility. Thus, the rubber composition exhibits a reversible change with water in the physical properties, specifically, obtains physical properties satisfying the relationship: tan $\delta$ when wet with water/tan $\delta$ when dry > 1.00. The use of a boron-containing compound other than boronic acid also provides the same effect, indicating that the rubber composition obtains a reversible change with water in the physical properties.

Accordingly, the rubber composition that contains boron, a rubber component, and a filler and satisfies the relationships (1) and (2) is believed to exhibit a reversible change with water in the physical properties.

The present invention solves the issue (aim) of exhibiting a reversible change with water in the physical properties by providing a rubber composition that contains boron, a rubber component, and a filler, and satisfies the relationship (1): Fc > 40 and the relationship (2): tan $\delta$ when wet with water/tan $\delta$ when dry > 1.00. In other words, the parameters of the relationships (1) and (2) do not define the issue (aim). The issue herein is to exhibit a reversible change with water in the physical properties. In order to solve the issue, the present invention is designed to have the structure satisfying the parameters.

The rubber composition contains a rubber component.

The rubber component in the present invention contributes to crosslinking and generally corresponds to a polymer component that has a weight average molecular weight (Mw) of 10,000 or more and is not extracted with acetone.

The weight average molecular weight of the rubber component is preferably 50,000 or more, more preferably 150,000 or more, still more preferably 200,000 or more, and it is preferably 2,000,000 or less, more preferably 1,500,000 or less, still more preferably 1,000,000 or less. A rubber component having a weight average molecular weight within the range indicated above tends to impart desired performances such as tire performances.

Herein, the weight average molecular weight (Mw) can be determined with a gel permeation chromatograph (GPC) (GPC-8000 series available from Tosoh Corporation, detector: differential refractometer, column: TSKGEL SUPERMULTIPORE HZ-M available from Tosoh Corporation). The resulting values are calibrated with polystyrene standards.

Examples of the rubber component include isoprene-based rubbers and diene-based rubbers such as polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Examples also include butyl-based rubbers and fluororubbers. Isoprene-based rubbers, BR, and SBR are preferred among these because they can impart desired performances such as tire performances. These may be used alone or in combination of two or more.

The diene-based rubbers may include unmodified diene-based rubbers and modified diene-based rubbers. Modified diene-based rubbers are desirable.

The modified diene-based rubbers may be any diene-based rubber having a functional group interactive with a filler such as silica. Examples include a chain end-modified diene-based rubber obtained by modifying at least one chain end of a diene-based rubber by a compound (modifier) having the functional group (i.e., a chain end-modified diene-based rubber terminated with the functional group); a backbone-modified diene-based rubber having the functional group in the backbone; a backbone- and chain end-modified diene-based rubber having the functional group in both the backbone and chain end (e.g., a backbone- and chain end-modified diene-based rubber in which the backbone has the functional group and at least one chain end is modified by the modifier); and a chain end-modified diene-based rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and ultra pure natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. The isoprene-based rubbers include unmodified isoprene-based rubbers and modified isoprene-based rubbers such as ENR as listed above. These may be used alone or in combination of two or more.

When the rubber composition contains isoprene-based rubbers, the amount of the isoprene-based rubbers based on 100% by mass of the rubber component is not limited, and it is preferably 5% by mass or more, more preferably 10% by mass or more, still more preferably 15% by mass or more. The upper limit of the amount is not limited, and it is preferably 70% by mass or less, more preferably 60% by mass or less, still more preferably 45% by mass or less. When

the amount is within the range indicated above, the effect tends to be suitably obtained.

Any BR may be used, such as high-cis BR having a high cis content, BR containing syndiotactic polybutadiene crystals, or BR synthesized using rare earth catalysts (rare earth-catalyzed BR). These may be used alone or in combination of two or more. High-cis BR having a cis content of 90% by mass or higher is preferred to improve abrasion resistance. The BR may include an unmodified BR and a modified BR such as BR modified with carboxylic acid. These may be used alone or in combination of two or more.

Usable commercial BR may be available from Ube Industries, Ltd., JSR Corporation, Asahi Kasei Corporation, Zeon Corporation, etc.

When the rubber composition contains BR, the amount of the BR based on 100% by mass of the rubber component is not limited, and it is preferably 5% by mass or more, more preferably 10% by mass or more, still more preferably 140 by mass or more. The upper limit is not limited, and it is preferably 70% by mass or less, more preferably 60% by mass or less, still more preferably 50% by mass or less. When the amount is within the range indicated above, the effect tends to be suitably obtained.

Any SBR may be used, such as emulsion-polymerized styrene-butadiene rubbers (E-SBR) or solution-polymerized styrene-butadiene rubbers (S-SBR). These may be used alone or in combination of two or more. The SBR may include an unmodified SBR and a modified SBR such as SBR modified with carboxylic acid. These may be used alone or in combination of two or more.

The SBR has a styrene content of preferably 5% by mass or higher, more preferably 10% by mass or higher, still more preferably 20% by mass or higher, particularly preferably 25% by mass or higher. The styrene content is preferably 45% by mass or lower, more preferably 40% by mass or lower, still more preferably 35% by mass or lower. When the styrene content is within the range indicated above, the effect tends to be better obtained.

Herein, the styrene content can be determined by $^1$H-NMR analysis.

The SBR has a vinyl bond content of preferably 5% by mass or higher, more preferably 20% by mass or higher, still more preferably 41% by mass or higher, particularly preferably 50% by mass or higher. The vinyl bond content is preferably 80% by mass or lower, more preferably 70% by mass or lower, still more preferably 65% by mass or lower. When the vinyl bond content is within the range indicated above, the effect tends to be better obtained.

Herein, the vinyl bond content (1,2-bond butadiene unit content) can be determined by infrared absorption spectrometry.

SBR products manufactured or sold by Sumitomo Chemical Co., Ltd., JSR Corporation, Asahi Kasei Corporation, Zeon Corporation, etc., may be used as the SBR.

When the rubber composition contains SBR, the amount of the SBR based on 100% by mass of the rubber component is not limited, and it is preferably 20% by mass or more, more preferably 41% by mass or more, still more preferably 500 by mass or more, particularly preferably 75% by mass or more, and may be 100% by mass. When the amount is within the range indicated above, the effect tends to be suitably obtained.

The rubber composition contains boron. The composition can contain boron by the use of a boron-containing compound, for example.

The amount of the boron based on 100% by mass of the rubber composition is preferably 0.01% by mass or more, more preferably 0.05% by mass or more, still more preferably 0.1% by mass or more. The upper limit of the amount is preferably 10% by mass or less, more preferably 1% by mass or less, still more preferably 0.8% by mass or less. When the amount is within the range indicated above, the effect tends to be suitably obtained.

Any boron-containing compound that contains boron may be used. A phenylboronic acid compound represented by the following formula (i) is suitably used.

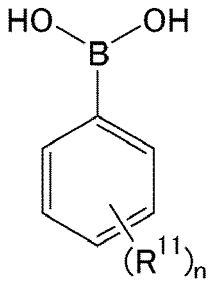

(i)

In the formula, $R^{11}$(s) may be the same or different and independently represent an optionally substituted monovalent hydrocarbon group which may contain a heteroatom, and n represents an integer of 1 to 5.

Examples of the monovalent hydrocarbon group constituting the backbone of $R^{11}$ in the formula (i) include linear, cyclic, or branched alkyl, alkenyl, aryl, and aralkyl groups. An alkyl group is particularly preferred among these.

The carbon number of $R^{11}$ is preferably 1 or more, more preferably 2 or more, still more preferably 3 or more, and it is preferably 30 or less, more preferably 20 or less, still more preferably 10 or less, particularly preferably 6 or less. Specific examples of the monovalent hydrocarbon group include methyl, ethyl, n-propyl, isopropyl, n-butyl, iso-butyl, sec-butyl, tert-butyl, pentyl, hexyl, heptyl, 2-ethylhexyl, octyl, nonyl, and decyl groups.

The substituent in $R^{11}$ in the formula (i) may be added to the backbone of the monovalent hydrocarbon group constituting the backbone of $R^{11}$ or may be introduced in the backbone. The substituent is not limited and may be a known group. Examples include C1-C4 alkoxy groups such as methoxy, ethoxy, and butoxy groups, halogen atoms such as chlorine, bromine, iodine, and fluorine, C6-C12 aryl groups such as phenyl, naphthyl, and biphenyl groups, and polar groups such as oxo (=O), hydroxy, carboxyl, carbonyl, amino, acetyl, amide, and imide groups. From the standpoint of the reactivity with polymers, preferred examples of the substituent include carboxyl, amino, and thiol groups.

To better obtain a reversible change with water in the physical properties, the substituent is preferably a nitrogen atom-containing group, more preferably an amino group.

When $R^{11}$ contains a nitrogen atom in the formula (i), the nitrogen atom is preferably bound to a boron atom in the phenylboronic acid compound represented by the formula (i) via one to six carbon atoms to obtain a reversible change with water in the physical properties. The number of carbon atoms therebetween is preferably two to five, more preferably two to four, still more preferably two or three. For example, a below-described phenylboronic acid compound C shown in FIG. 1 is a compound in which a nitrogen atom is bound to a boron atom via three carbon atoms.

Examples of the amino group as a substituent in $R^{11}$ include primary amino groups ($-NH_2$), secondary amino groups ($-NHR^1$), and tertiary amino groups ($-NR^1R^2$). Examples of $R^1$ and $R^2$ include alkyl, phenyl, and aralkyl groups. The carbon number of $R^1$ and $R^2$ is preferably one to eight. The amino group may be in the form of an ammonium base such as a tertiary ammonium base or a quaternary ammonium base. The amino group may be a divalent amino group. Examples of the divalent amino group include -N(H)- and $-N(R^3)$. Examples of $R^3$ include alkyl, phenyl, and aralkyl groups. The carbon number of $R^3$ is preferably one to eight. When the amino group is a divalent amino group, it is introduced in the backbone of $R^{11}$, for example.

Examples of the heteroatom in $R^{11}$ include nitrogen, oxygen, and sulfur atoms. To better obtain the effect, a nitrogen atom is preferred among these.

To better obtain the effect, n in the formula (i) is preferably 1 to 4, more preferably 1 to 3, still more preferably 1 or 2, particularly preferably 1.

To better obtain the effect, the phenylboronic acid compound represented by the formula (i) is preferably a compound represented by the following formula (i-1):

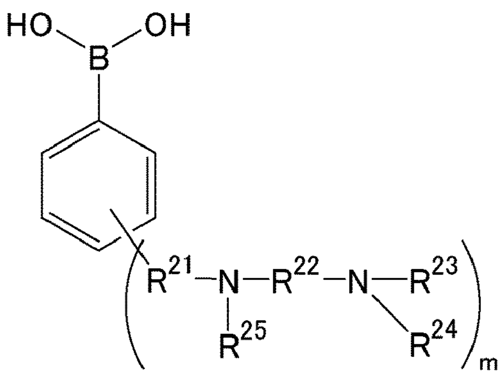

(i-1)

wherein $R^{21}$ and $R^{22}$ may be the same or different and independently represent an optionally substituted divalent hydrocarbon group which may contain a heteroatom, $R^{23}$ to $R^{25}$ may be the same or different and independently represent a hydrogen atom or an optionally substituted monovalent hydrocarbon group which may contain a heteroatom, and m represents an integer of 1 to 5.

The divalent hydrocarbon group constituting the backbone of $R^{21}$ and $R^{22}$ in the formula (i-1) may be linear, cyclic, or branched, and examples include alkylene, alkenylene, cycloalkylene, cycloalkyl alkylene, arylene, and aralkylene groups. The carbon number of $R^{21}$ and $R^{22}$ is preferably 1 to 30, more preferably 1 to 15, still more preferably 1 to 8, particularly preferably 1 to 5. Specific examples of the divalent hydrocarbon group include methylene, ethylene, trimethylene, tetramethylene, pentamethylene, and hexamethylene groups.

The substituents in $R^{21}$ and $R^{22}$ may be added to the backbones of the divalent hydrocarbon groups constituting the backbones of $R^{21}$ and $R^{22}$, respectively, or may be introduced in the backbones. The substituents are not limited, and examples include the substituents in $R^{11}$. Examples of the heteroatoms in $R^{21}$ and $R^{22}$ include the heteroatoms in $R^{11}$.

Examples of the monovalent hydrocarbon groups constituting the backbones of $R^{23}$ to $R^{25}$ include the mono-

valent hydrocarbon groups constituting the backbone of $R^{11}$. The substituents in $R^{23}$ to $R^{25}$ may be added to the backbones of the monovalent hydrocarbon groups constituting the backbones of $R^{23}$ to $R^{25}$, respectively, or may be introduced in the backbones. The substituents are not limited, and examples include the substituent in $R^{11}$. Examples of the heteroatoms in $R^{23}$ to $R^{25}$ include the heteroatoms in $R^{11}$.

To better obtain the effect, $R^{23}$ is preferably a hydrogen atom or a monovalent hydrocarbon group, more preferably a hydrogen atom.

To better obtain the effect, $R^{24}$ is preferably a hydrogen atom or a monovalent hydrocarbon group, more preferably a hydrogen atom.

To better obtain the effect, $R^{25}$ is preferably a hydrogen atom or a monovalent hydrocarbon group, more preferably a hydrogen atom.

To better obtain the effect, m in the formula (i-1) is preferably 1 to 4, more preferably 1 to 3, still more preferably 1 or 2, particularly preferably 1.

The phenylboronic acid compound represented by the formula (i) can be synthesized in accordance with known methods. An exemplary synthetic method of the phenylboronic acid compound is described below. Yet, the phenylboronic acid compound is not limited to those obtained by the synthetic method and includes compounds synthetized by any synthetic method that can synthesize the phenylboronic acid compound.

For example, the phenylboronic acid compound represented by the formula (i) can be synthesized by reacting a prescribed phenylboronic acid compound with a compound which can introduce a group represented by $R^{11}$.

The reaction is usually performed in a solvent.

The solvent used in the reaction is not limited and may be appropriately selected from those in which the reaction can proceed. Examples of the solvent include ethers such as ethylene glycol dimethyl ether, tetrahydrofuran, and 1,4-dioxane, aromatic hydrocarbons such as toluene, N,N-dimethylformamide (DMF), N,N-dimethyl acetamide, N,N'-dimethylimidazolidinone, dimethyl sulfoxide, water, and mixtures of these. A known catalyst may be appropriately used in the reaction. Examples of the catalyst include palladium catalysts. The amount of the catalyst used in the reaction may be appropriately selected. The mixing ratio of the phenylboronic acid compound and the compound which can introduce a group represented by $R^{11}$ may be appropriately selected within the range in which the reaction can proceed. The reaction temperature is usually 50°C to 110°C. The reaction time is usually one to 24 hours. After the completion of the reaction, a target substance can be separated in an appropriate post treatment, for example, by extracting the reaction mixture with an organic solvent and then condensing the organic phase. If necessary, the target substance may be further purified by recrystallization, chromatography, or other techniques.

In an exemplary specific synthetic example, a phenylboronic acid compound C can be synthesized via the synthetic route shown in FIG. 1.

For example, the phenylboronic acid compound C is synthesized via the route shown in FIG. 1. The route involves reaction of a phenylboronic acid compound B with an amine compound in a solvent (methanol) at room temperature overnight, reduction with sodium borohydride ($NaBH_4$), and removing tert-butoxy carbonyl group (Boc) protection with hydrochloric acid (HCl).

As described above, the rubber composition contains boron. Preferably, the rubber composition contains a modified resin that has been modified with the boron-containing compound.

Herein, the term "resin" refers to a resin which is solid at 25°C.

The amount of the modified resin per 100 parts by mass of the rubber component in the rubber composition is preferably 5 parts by mass or more, more preferably 10 parts by mass or more, still more preferably 15 parts by mass or more, particularly preferably 20 parts by mass or more. The upper limit of the amount is preferably 100 parts by mass or less, more preferably 50 parts by mass or less, still more preferably 40 parts by mass or less. When the amount is within the range indicated above, tire performances such as wet grip performance tend to be better obtained. The amount of a modified rosin resin described later is desirably in the same range.

The glass transition temperature (Tg) of the modified resin is preferably 50°C or higher, more preferably 80°C or higher, still more preferably 100°C or higher, particularly preferably 110°C or higher. The upper limit of the Tg is preferably 160°C or lower, more preferably 150°C or lower, still more preferably 145°C or lower. When the Tg is within the range indicated above, tire performances such as wet grip performance tend to be better obtained.

Herein, Tg refers to a peak temperature in the temperature distribution curve of tan $\delta$ and may be measured by the method described in EXAMPLES.

Examples of the resin constituting the backbone of the modified resin include natural resins and synthetic resins.

Examples of the natural resins include rosin resins such as rosin and rosin derivatives and terpene resins. Examples of the synthetic resins include petroleum resins, phenolic resins, coal-based resins, and terpene resins. To better obtain the effect, natural resins are preferred, and rosin resins are more preferred among these. These may be used alone or in combination of two or more.

The reason why the above-described effect is obtained with the use of the modified resin, in particular a modified resin that is produced by reacting a rosin resin with a phenylboronic acid compound represented by the formula (i) is

not completely clear, but it may be attributed to the following mechanism.

Rosin resins are mainly mixtures of abietic acid containing conjugated double bonds and carboxyl groups with its isomers. Rosin resins have bulky structures with high reactivity and are capable of binding to a phenylboronic acid compound represented by the formula (i). The molecular weight of a phenyl boronic acid rosin obtained by reacting a rosin resin and the phenylboronic acid compound can be controlled with water. Upon drying the phenyl boronic acid rosin, trimolecular condensation occurs to increase the molecular weight. Accordingly, the phenyl boronic acid rosin has a high Tg and is hardly compatible with rubber. In contrast, in the presence of water, boroxine is decomposed to reduce the molecular weight. Thus, the phenyl boronic acid rosin has a low Tg and is easily compatible with rubber. Thus, the modified rosin resin using a rosin resin can provide a reversible change with water in the physical properties. For example, a tire containing the modified rosin resin reduces the elastic modulus upon being in contact with water, increasing energy loss on a wet road surface. Thus, the wet grip performance of the tire is believed to be improved.

Examples of the rosin include natural rosins such as gum rosin, wood rosin, and tall rosin, stabilized rosins or polymerized rosins produced by subjecting a natural rosin to disproportionation or hydrogenation, and unsaturated acid-modified rosins produced by modification with an unsaturated acid such as maleic acid, fumaric acid, or (meth)acrylic acid.

Examples of the rosin derivatives include those derived from the rosin.

Specific examples include esterified compounds of the rosin and phenol-modified products of the rosin, and esterified compounds of the phenol-modified products. The esterified compounds of the rosin refer to compounds produced by esterifying the rosin with a polyol. Examples of the polyol include divalent alcohols such as ethylene glycol, diethylene glycol, propylene glycol, and neopentyl glycol, trivalent alcohols such as glycerol, trimethylolethane, and trimethylolpropane, tetravalent alcohols such as pentaerythritol and diglycerol, and hexavalent alcohols such as dipentaerythritol.

Examples of the petroleum resins include those produced by polymerizing a fraction containing an unsaturated hydrocarbon monomer generated as a biproduct in thermal cracking of petroleum naphtha or the like. Specifically, the petroleum resins are classified into aliphatic petroleum resins, aromatic petroleum resins, aliphatic/aromatic petroleum resins, and alicyclic petroleum resins (hydrogenated petroleum resins).

Examples of the aliphatic petroleum resins include polymers including one or two or more of C4-C5 olefins and dienes (olefins such as butene-1, isobutylene, and pentene-1; and dienes such as butadiene, piperylene (1,3-pentadiene), and isoprene). Aliphatic petroleum resins (C4 petroleum resins or C5 petroleum resins) obtained from fractions (C4 petroleum fraction or C5 petroleum fractions) such as butadiene, piperylene, and isoprene are preferred among these.

Examples of the aromatic petroleum resins include polymers including one or two or more of C8-C10 vinyl group-containing aromatic hydrocarbons (styrene, o-vinyl toluene, m-vinyl toluene, p-vinyl toluene, α-methylstyrene, β-methylstyrene, indene, methylindene, etc.). Aromatic petroleum resins (C9 petroleum resins) obtained from fractions (C9 petroleum fractions) such as vinyl toluene and indene are preferred among these.

Examples of the aliphatic/aromatic petroleum resins include copolymerized petroleum resins (C5/C9 copolymerized resins) obtained by copolymerizing the C5 petroleum fractions and the C9 petroleum fractions.

Examples of the alicyclic petroleum resins include hydrogenated petroleum resins obtained by hydrogenation of the aromatic petroleum resins or the aliphatic/aromatic petroleum resins and synthetic resins obtained by synthesizing, as a main raw material, dicyclopentadiene extracted from the C5 fractions. Hydrogenated petroleum resins obtained by hydrogenation of the aromatic petroleum resins or the aliphatic/aromatic petroleum resins are preferred among these.

Examples of the phenolic resins include resol phenolic resins obtained by reacting phenols with formaldehyde in the presence of an alkali catalyst, novolac phenolic resins obtained by reacting phenols with formaldehyde in the presence of an acid catalyst, and rosin-modified phenolic resins obtained by reacting a resol phenolic resin or a novolac phenolic resin with a natural rosin.

Examples of the coal-based resins include those obtained by polymerizing a mixture of coumarone, indene, styrene, etc. in coal tar.

The terpene resins are usually obtained by polymerizing terpene monomers alone or copolymerizing terpene monomers and aromatic monomers or copolymerizing terpene monomers and phenols in an organic solvent in the presence of a Friedel-Crafts catalyst. Hydrogenated terpene resins obtained by hydrogenation of the produced terpene resins are also usable. Examples of the terpene resins include α-pinene resin, β-pinene resin, aromatic modified terpene resin, terpene phenolic resin, and hydrogenated terpene resin.

Examples of the terpene monomers include C5 hemiterpenes such as isoprene, C10 monoterpenes such as α-pinene, β-pinene, dipentene, d-limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, paramenthadienes, and carenes, C15 sesqui terpenes such as caryophyllene and longifolene, and C20 diterpenes. Examples of the aromatic monomers include styrene, α-methylstyrene, vinyl toluene, and isopropenyl toluene. Examples of the phenols include phenol, cresol, xylenol, and bisphenol A.

The process of the reaction between the phenylboronic acid compound represented by the formula (i) and the resin to obtain the modified resin that has been modified with the boron-containing compound is not limited and may be

performed by known methods. The reaction may be performed in a solvent such as water or an organic solvent or may be performed without solvent. The solvent is not limited, and it is preferably a solvent in which the phenylboronic acid compound and the polymer are both easily dissolved. Specific examples of the solvent include those described above. The reaction temperature and the reaction time may be appropriately set depending on the phenylboronic acid compound and the polymer such that the reaction proceeds.

In a specific synthetic example, a modified resin A can be synthesized via the synthetic route shown in FIG. 3.

Specifically, for example, the gum rosin and the phenylboronic acid compound C in FIG. 3 are dissolved in a solvent, and the resulting solution is reacted by stirring it at an appropriate temperature. After the completion of the reaction, a solution containing the reaction product is precipitated and dried to obtain a target reaction product (modified rosin resin that has been modified with the phenylboronic acid compound represented by the formula (i): phenyl boronic acid-added rosin (modified resin A)).

The rubber composition contains a filler and satisfies the following relationship (1):

(1) $Fc > 40$
wherein Fc refers to a filler content (parts by mass) per 100 parts by mass of the rubber component.

The value on the right side of the relationship (1) is preferably 60, more preferably 80, still more preferably 90. Fc is preferably 200 parts by mass or lower, more preferably 180 parts by mass or lower, still more preferably 160 parts by mass or lower. When the Fc value is within the range indicated above, tire performances such as wet grip performance tend to be better obtained.

Examples of the filler include fillers known in the rubber field, including inorganic fillers such as silica, carbon black, calcium carbonate, talc, alumina, clay, aluminum hydroxide, aluminum oxide, and mica; and fillers with poor dispersion properties. From the standpoint of tire performances in use in a tire component, silica and carbon black are preferred among these.

Examples of usable silica include dry silica (anhydrous silica) and wet silica (hydrous silica). Wet silica is preferred among these because it contains a large number of silanol groups. Usable commercial silica may be available from Degussa, Rhodia, Tosoh Silica Corporation, Solvay Japan, Tokuyama Corporation, etc.

The nitrogen adsorption specific surface area ($N_2SA$) of the silica is preferably 10 $m^2/g$ or more, more preferably 20 $m^2/g$ or more, still more preferably 30 $m^2/g$ or more. The upper limit of the $N_2SA$ of the silica is not limited, and it is preferably 300 $m^2/g$ or less, more preferably 275 $m^2/g$ or less, still more preferably 250 $m^2/g$ or less. When the $N_2SA$ is within the range indicated above, tire performances such as wet grip performance tend to be better obtained.

Herein, the $N_2SA$ of silica is measured by a BET method in accordance with ASTM D3037-93.

The amount of silica per 100 parts by mass of the rubber component in the rubber composition is preferably 40 parts by mass or more, more preferably 50 parts by mass or more, still more preferably 80 parts by mass or more, particularly preferably 90 parts by mass or more. The upper limit of the amount is preferably 200 parts by mass or less, more preferably 150 parts by mass or less, still more preferably 120 parts by mass or less. When the amount is within the range indicated above, tire performances such as wet grip performance tend to be better obtained.

The rubber composition which contains silica may contain a silane coupling agent together with the silica.

Non-limiting examples of usable silane coupling agents include silane coupling agents conventionally used with silica in the rubber industry, including: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products may be available from Degussa, Momentive, Shin-Etsu Silicone, Tokyo Chemical Industry Co., Ltd., AZmax. Co., Dow Corning Toray Co., Ltd., etc. These may be used alone or in combination of two or more. Sulfide silane coupling agents and mercapto silane coupling agents are preferred among these.

The amount of silane coupling agents per 100 parts by mass of silica in the rubber composition is preferably 3 parts by mass or more, more preferably 6 parts by mass or more. The amount is preferably 20 parts by mass or less, more preferably 15 parts by mass or less.

Examples of usable carbon black include N134, N110, N220, N234, N219, N339, N330, N326, N351, N550,

and N762. These may be used alone or in combination of two or more. Usable commercial products may be available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The nitrogen adsorption specific surface area ($N_2SA$) of the carbon black is preferably 10 $m^2/g$ or more, more preferably 20 $m^2/g$ or more, still more preferably 30 $m^2/g$ or more. The upper limit of the $N_2SA$ of the carbon black is not limited, and it is preferably 300 $m^2/g$ or less, more preferably 275 $m^2/g$ or less, still more preferably 250 $m^2/g$ or less. When the $N_2SA$ is within the range indicated above, tire performances such as wet grip performance tend to be better obtained.

Herein, the nitrogen adsorption specific surface area of carbon black can be determined in accordance with JIS K 6217-2:2001.

The amount of carbon black per 100 parts by mass of the rubber component in the rubber composition is preferably 3 parts by mass or more, more preferably 5 parts by mass or more, still more preferably 6 parts by mass or more. The upper limit is preferably 50 parts by mass or less, more preferably 30 parts by mass or less, still more preferably 20 parts by mass or less. When the amount is within the range indicated above, tire performances such as wet grip performance tend to be better obtained.

The rubber composition may contain a plasticizer.

The term "plasticizer" refers to a material that imparts plasticity to rubber components. Examples include liquid plasticizers (plasticizers which are liquid at room temperature (25°C)) and resins (resins which are solid at room temperature (25°C)). Herein, the modified resins correspond to resins.

The amount of plasticizers (total amounts of liquid plasticizers, resins, and other plasticizers) per 100 parts by mass of the rubber component in the rubber composition is preferably 5 parts by mass or more, more preferably 10 parts by mass or more, still more preferably 15 parts by mass or more, particularly preferably 20 parts by mass or more. The upper limit of the amount is preferably 100 parts by mass or less, more preferably 50 parts by mass or less, still more preferably 40 parts by mass or less. When the amount is within the range indicated above, tire performances such as wet grip performance tend to be better obtained.

Liquid plasticizers (plasticizers which are liquid at room temperature (25°C)) usable in the rubber composition are not limited, and examples include oils and liquid polymers such as liquid resins, liquid diene-based polymers, and liquid farnesene-based polymers. These liquid plasticizers may be used alone or in combination of two or more.

When the rubber composition contains a liquid plasticizer, the amount of the liquid plasticizer per 100 parts by mass of the rubber component is preferably 5 parts by mass or more, more preferably 10 parts by mass or more, still more preferably 15 parts by mass or more, particularly preferably 20 parts by mass or more. The upper limit of the amount is preferably 100 parts by mass or less, more preferably 50 parts by mass or less, still more preferably 40 parts by mass or less. When the amount is within the range indicated above, tire performances such as wet grip performance tend to be better obtained. The amount of the liquid plasticizer includes the amount of oils in oil-extended rubbers.

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products may be available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group, etc. Process oils such as paraffinic process oils, aromatic process oils, and naphthenic process oils, and plant oils are preferred among these.

Examples of the liquid resins include terpene resins (including terpene phenolic resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenolic resins, olefin resins, polyurethane resins, and acrylic resins. Hydrogenated products of these resins are also usable.

Examples of the liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain ends or backbones of these polymers may be modified with a polar group. Hydrogenated products of these polymers are also usable.

The term "liquid farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

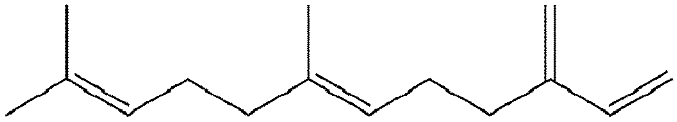

The liquid farnesene polymers may be either homopolymers of farnesene (farnesene homopolymers) or copolymers of farnesene and vinyl monomers (farnesene-vinyl monomer copolymers). These may be used alone or in combination of two or more. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. These may be used alone or in combination of two or more. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Liquid farnesene polymers having a weight average molecular weight (Mw) of 3,000 to 300,000 may be suitably used. The Mw of the liquid farnesene polymers is preferably 8,000 or more, more preferably 10,000 or more, and it is preferably 100,000 or less, more preferably 60,000 or less, still more preferably 50,000 or less.

Examples of the resin (resin which is solid at room temperature (25°C)) usable in the rubber composition include the modified resins that have been modified with the boron-containing compounds and also include the resins constituting the backbones of the modified resins.

The amount of the resin (total amount of the modified resin and other resins) per 100 parts by mass of the rubber component in the rubber composition is preferably 5 parts by mass or more, more preferably 10 parts by mass or more, still more preferably 15 parts by mass or more, particularly preferably 20 parts by mass or more. The upper limit of the amount is preferably 100 parts by mass or less, more preferably 50 parts by mass or less, still more preferably 40 parts by mass or less. When the amount is within the range indicated above, tire performances such as wet grip performance tend to be better obtained.

Usable commercial plasticizers may be available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

From the standpoint of properties such as cracking resistance and ozone resistance, the rubber composition preferably contains an antioxidant.

Any antioxidant may be used. Examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, and N-(1,3-dimethylbutyl)-N'-phenyl-p-phenylenediamine or polymerized 2,2,4-trimethyl-1,2-dihydroquinoline is more preferred. Usable commercial products may be available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the rubber composition is preferably 0.2 parts by mass or more, more preferably 0.5 parts by mass or more. The amount is preferably 7.0 parts by mass or less, more preferably 4.0 parts by mass or less.

The rubber composition may contain stearic acid.

The amount of stearic acid per 100 parts by mass of the rubber component in the rubber composition is preferably 0.5 to 10 parts by mass, more preferably 0.5 to 5 parts by mass.

The stearic acid may be conventional ones. Usable commercial products may be available from NOF Corporation, Kao Corporation, FUJIFILM Wako Pure Chemical Corporation, Chiba Fatty Acid Co., Ltd., etc.

The rubber composition may contain zinc oxide.

The amount of zinc oxide per 100 parts by mass of the rubber component in the rubber composition is preferably

0.5 to 10 parts by mass, more preferably 1 to 5 parts by mass.

The zinc oxide may be conventional ones. Usable commercial products may be available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The rubber composition may contain wax.

The amount of wax per 100 parts by mass of the rubber component in the rubber composition is preferably 0.5 to 10 parts by mass, more preferably 1 to 5 parts by mass.

Any wax may be used, and examples include petroleum waxes and natural waxes and also include synthetic waxes prepared by purifying or chemically treating a plurality of waxes. These waxes may be used alone or in combination of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these waxes. Usable commercial products may be available from Ouchi Shinko Chemical Industrial Co., Ltd., Nippon Seiro Co., Ltd., Seiko Chemical Co., Ltd., etc.

The rubber composition may contain sulfur.

The amount of sulfur per 100 parts by mass of the rubber component in the rubber composition is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products may be available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combination of two or more.

The rubber composition may contain a vulcanization accelerator.

The amount of vulcanization accelerators per 100 parts by mass of the rubber component in the rubber composition is usually 0.3 to 10 parts by mass, preferably 0.5 to 7 parts by mass.

Any type of vulcanization accelerator may be used, including usually used ones. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combination of two or more. Sulfenamide vulcanization accelerators and guanidine vulcanization accelerators are preferred among these.

The rubber composition may contain other appropriate additives usually used in the application field, such as a release agent or a pigment, in addition to the above-described components.

The rubber composition satisfies the following relationship (2). Thus, the rubber composition reversibly changes its loss tangent (tan $\delta$) with water.

(2) tan $\delta$ when wet with water/tan $\delta$ when dry > 1.00

In the relationship (2), tan $\delta$ refers to a loss tangent measured at a temperature of 30°C, an initial strain of 10%, a dynamic strain of 20, and a frequency of 10 Hz in an elongation mode.

The value on the right side of the relationship (2) is preferably 1.15, more preferably 1.20, still more preferably 1.25, particularly preferably 1.28. The upper limit of the ratio: tan $\delta$ when wet with water/tan $\delta$ when dry is not limited, and it is preferably 1.80 or lower, more preferably 1.60 or lower, still more preferably 1.50 or lower, particularly preferably 1.40 or lower. When the value is within the range indicated above, the effect tends to be suitably obtained.

The rubber composition desirably satisfies the following relationship:

tan $\delta$ when dry > 0.120

wherein tan $\delta$ refers to a loss tangent measured at a temperature of 30°C, an initial strain of 10%, a dynamic strain of 20, and a frequency of 10 Hz in an elongation mode.

The value on the right side of the relationship is preferably 0.130, more preferably 0.150, still more preferably 0.170. The upper limit of tan $\delta$ when dry is not limited, and it is preferably 0.350 or less, more preferably 0.280 or less, still more preferably 0.250 or less. When the value is within the range indicated above, the effect tends to be suitably obtained.

The rubber composition desirably satisfies the following relationship:

tan δ when wet with water > 0.180

wherein tan δ refers to a loss tangent measured at a temperature of 30°C, an initial strain of 10%, a dynamic strain of 20, and a frequency of 10 Hz in an elongation mode.

The value on the right side of the relationship is preferably 0.200, more preferably 0.210, still more preferably 0.220. The upper limit of tan δ when wet with water is not limited, and it is preferably 0.450 or less, more preferably 0.350 or less, still more preferably 0.280 or less. When the value is within the range indicated above, the effect tends to be suitably obtained.

Herein, the tan δ of a rubber composition which is a crosslinkable rubber composition refers to the tan δ of the crosslinked rubber composition. For example, the tan δ of a crosslinkable rubber composition that contains a diene-based rubber, sulfur, and the like refers to the tan δ of the vulcanized (crosslinked) rubber composition. The tan δ is a value determined by a viscoelastic test of the crosslinked rubber composition.

Herein, the expression "reversibly changes its loss tangent (tan δ) with water" means that the tan δ of the (vulcanized) rubber composition reversibly increases or decreases depending on the presence of water. It is sufficient that the tan δ reversibly changes when the state of the rubber composition changes as follows: dry → wet with water → dry, for example. The rubber composition in the former dry state may or may not have the same tan δ as in the latter dry state.

Herein, the term "tan δ when dry" means the tan δ of the rubber composition which is dry and specifically refers to the tan δ of the rubber composition which has been dried as described in EXAMPLES.

Herein, the term "tan δ when wet with water" means the tan δ of the rubber composition which is wet with water and specifically refers to the tan δ of the rubber composition which has been wet with water as described in EXAMPLES.

Herein, the tan δ of the rubber composition refers to tan δ measured at a temperature of 30°C, an initial strain of 10%, a dynamic strain of 20, and a frequency of 10 Hz in an elongation mode.

The reversible tan δ change with water of the rubber composition expressed by the relationship (2) may be achieved, for example, by allowing the rubber composition to contain a boron-containing compound and/or a resin or to contain a modified resin that has been modified with a boron-containing compound to cause therein cleavage of bonds upon addition of water and reformation of bonds upon drying water, so that the tan δ decreases when wet with water and increases when dry.

The tan δ when dry can be controlled by the types and the amounts of chemicals (in particular, rubber components, fillers, softening agents, resins, sulfur, vulcanization accelerators, or silane coupling agents) blended in the rubber composition. For example, the tan δ when dry tends to be increased by using softening agents (e.g., resin) with low compatibility with the rubber component, using unmodified rubber, increasing the amount of fillers, increasing oil as a plasticizer, reducing sulfur, reducing vulcanization accelerators, or reducing silane coupling agents.

The tan δ when wet with water can be controlled to be higher than the tan δ when dry by, for example, blending a boron-containing compound and/or a resin or blending a modified resin that has been modified with a boron-containing compound, thereby controlling the tan δ when dry and the tan δ when wet with water. Specifically, when the rubber composition contains a boron-containing compound and/or a resin or contains a modified resin that has been modified with a boron-containing compound, cleavage of bonds upon addition of water and reformation of bonds upon drying water occur in the rubber composition. Thus, the tan δ when wet with water can be higher than the tan δ when dry. The tan δ when wet with water can be controlled by the types and amounts of chemicals blended in the rubber composition. For example, the tan δ when wet with water can have the same tendency as described above by using the same techniques as those for controlling the tan δ when dry.

Specifically, the rubber composition can achieve the reversible tan δ change with water expressed by the relationship (2) when it contains a boron-containing compound and/or a resin or contains a modified resin that has been modified with a boron-containing compound, while controlling the tan δ when dry to be within the desired range.

The rubber composition may be prepared by known methods. For example, it may be prepared for example by kneading the components in a rubber kneading machine such as an open roll mill or a Banbury mixer, optionally followed by crosslinking. The kneading conditions include a kneading temperature of usually 50°C to 200°C, preferably 80°C to 190°C, and a kneading time of usually 30 seconds to 30 minutes, preferably 1 minute to 30 minutes.

The rubber composition is usable in tires, footwear soles, floor materials, vibration-proof materials, seismic isolators, butyl frame materials, belts, hoses, packing materials, medical stoppers, and other industrial rubber products. In particular, the rubber composition is preferably used as a rubber composition for tires due to its excellent tire performances such as wet grip performance.

The rubber composition may be used in any tire component. Examples of the tire component include treads (also referred to as cap treads), sidewalls, base treads, bead apexes, clinch apexes, innerliners, undertreads, breaker toppings, and ply toppings. In particular, the rubber composition is suitable for treads because of its excellent wet grip

performance, etc.

<Tire>

The rubber composition is suitable for use in a tire. Examples of the tire include pneumatic tires and nonpneumatic tires. Pneumatic tires are preferred among these. In particular, the rubber composition may be suitably used in summer tires, winter tires (e.g., studless tires, snow tires, or studded tires), all-season tires, for example. The tire may be used as a tire for passenger vehicles, large passenger vehicles, large SUVs, heavy duty vehicles such as trucks and buses, light trucks, or motorcycles, or as a racing tire (high performance tire), for example. The tire is especially suitable for passenger vehicles or light trucks.

The tire is produced using the rubber composition by usual methods. For example, the rubber composition containing the materials, before vulcanization, may be extruded into the shape of a tire component such as a tread and assembled with other tire components on a tire building machine in a usual manner to build an unvulcanized tire. The unvulcanized tire is heated and pressurized in a vulcanizer, whereby the tire can be produced.

EXAMPLES

Examples which are believed to be preferable to carry out the present invention are described below. The scope of the present invention is not limited to the examples.

<Synthesis of phenylboronic acid compound>

A phenylboronic acid compound C (a phenylboronic acid compound represented by the formula (i)) is synthesized via the synthetic route shown in FIG. 1.

Specifically, the phenylboronic acid compound C is synthesized by the following method.

The method involves reacting a phenylboronic acid compound B with an amine compound in methanol at room temperature overnight, reduction with sodium borohydride ($NaBH_4$), and removing tert-butoxy carbonyl group (Boc) protection with hydrochloric acid (HCl), whereby a phenylboronic acid compound C is synthesized.

The $^1$H-NMR spectrum of a synthetic product shown in FIG. 2 indicates the synthesis of a phenylboronic acid compound C (a phenylboronic acid compound represented by the formula (i)).

<Synthesis of modified resin>

A modified resin A (a modified rosin resin that has been modified with a phenylboronic acid compound represented by the formula (i)) is synthesized via the synthetic route shown in FIG. 3.

Specifically, the modified resin A is synthesized by the following method.

(Synthesis of modified resin A)

A gum resin is placed with DMF in a beaker and is dissolved by stirring. Then, 1-hydroxy benzotriazole is added to the solution and dispersed by stirring. The phenylboronic acid compound C is dissolved in DMF, and the solution is added to the gum rosin-mixed solution. Triethanolamine is added dropwise to the resulting solution and stirred overnight. Next day, the reaction solution is precipitated in water, and solids are collected, washed with water, and lyophilized, whereby a modified resin A can be obtained.

The materials used in the synthesis of the phenylboronic acid compound C and the modified resin A shown in FIG. 1 and FIG. 3, respectively, are listed below.

Phenylboronic acid compound B: a product of Boron Molecular Pty Limited (the compound B in FIG. 1)
Amine compound: a product of Combi-Blocks (the amine compound in FIG. 1)
Sodium borohydride ($NaBH_4$): a product of FUJIFILM Wako Pure Chemical Corporation
Hydrochloric acid (HCl): a product of FUJIFILM Wako Pure Chemical Corporation
Gum rosin: a product of FUJIFILM Wako Pure Chemical Corporation (Tg 40°C)
DMF: a product of FUJIFILM Wako Pure Chemical Corporation
1-Hydroxy benzotriazole: a product of FUJIFILM Wako Pure Chemical Corporation
Triethanolamine: a product of FUJIFILM Wako Pure Chemical Corporation

The IR spectrum of the modified resin A in FIG. 4 shows a low COOH peak of the gum rosin and a new amide peak after the reaction. This result demonstrates the synthesis of a modified resin A (a modified rosin resin that has

been modified with a phenylboronic acid compound represented by the formula (i)).

When the modified resin A is repeatedly dried at room temperature and normal pressure to a constant weight and is immersed in water to be wet with water, reversibly, trimolecular dehydration condensation may occur to cause generation of boroxine (boroxine crosslinking) and, upon being in contact with water, the generated boroxine crosslinks may be decomposed. Thus, the modified resin A is believed to provide a reversible change with water in the physical properties.

<Production of test tire>

According to the formulation in Table 1, the materials other than sulfur and vulcanization accelerators are kneaded to obtain a kneaded mixture.

To the kneaded mixture are added the sulfur and the vulcanization accelerators according to the formulation in Table 1, and they are kneaded at 70°C for eight minutes to obtain an unvulcanized rubber composition.

The unvulcanized rubber composition is extruded and molded into the shape of a cap layer. The cap layer is assembled with other tire components on a tire building machine to build an unvulcanized tire. The unvulcanized tire is press-vulcanized at 170°C for 20 minutes, thereby obtaining a test tire (size 195/65R15, specification shown in Table 1).

Test tires are produced in simulation using rubber compositions with different formulations and specifications according to Table 1, and they are evaluated. Table 1 shows the evaluation results calculated as described in the evaluation methods below.

Comparative Example 1 is used as a reference comparative example.

SBR 1: HPR850 available from JSR Corporation (modified SBR, styrene content: 27.5% by mass, vinyl bond content: 59.0% by mass)
SBR 2: HPR840 available from JSR Corporation (modified SBR, styrene content: 10% by mass, vinyl bond content: 41% by mass)
NR: SVR-L available from Nomura Trading Co., Ltd.
BR: BR730 available from JSR Corporation
Carbon black: DIABLACK I (N220, $N_2SA$ 114 $m^2/g$) available from Mitsubishi Chemical Corporation
Silica: ULTRASIL VN3 ($N_2SA$ 175 $m^2/g$) available from Evonik-Degussa
Silane coupling agent: Si266 (bis(3-triethoxysilylpropyl)disulfide) available from Evonik
Oil: Diana Process NH-70S (aromatic process oil) available from Idemitsu Kosan Co., Ltd
Gum rosin: a product of FUJIFILM Wako Pure Chemical Corporation (Tg 40°C)
Modified resin A: synthesized as above (Tg 110°C)
Zinc oxide: zinc oxide #1 available from Mitsui Mining & Smelting Co., Ltd.
Wax: Ozoace 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Sulfur: powdered sulfur (oil content of 50) available from Tsurumi Chemical Industry Co., Ltd.
Vulcanization accelerator 1: NOCCELER D (diphenylguanidine) available from Ouchi Shinko Chemical Industrial Co., Ltd.
Vulcanization accelerator 2: NOCCELER NS (N-tert-butyl-2-benzothiazolylsulfenamide (TBBS)) available from Ouchi Shinko Chemical Industrial Co., Ltd.

<Viscoelastic test (tan δ at 30°C)>

A viscoelastic test sample having a length of 40 mm, a width of 3 mm, and a thickness of 0.5 mm is collected from the inside of a cap tread rubber layer in each test tire such that the longitudinal direction of the sample corresponds to the circumferential direction of the tire. The tan δ of the cap tread is measured at a temperature of 30°C, an initial strain of 10%, a dynamic strain of 20, and a frequency of 10 Hz in an elongation mode using a RSA series machine available from TA Instruments. A measurement value is obtained after 10 minutes from the start of the measurement. The thickness direction of the sample corresponds to the radial direction of the tire.

<tan δ when dry>

The viscoelastic test sample having a length of 40 mm, a width of 3 mm, and a thickness of 0.5 mm is dried at room temperature and normal pressure to a constant weight. The loss tangent, tan δ, of the dried vulcanized rubber composition (rubber piece) is measured by the above-described method, and the measured tan δ is determined as tan δ when dry.

<tan δ when wet with water>

The viscoelastic test sample having a length of 40 mm, a width of 3 mm, and a thickness of 0.5 mm is immersed in 100 mL of water at 23°C for two hours to prepare a vulcanized polymer composition wet with water. The loss tangent, tan δ, of the water-wet vulcanized rubber composition (rubber piece) is measured in water by the above-described viscoelastic test method using an immersion measurement jig of the RSA, and the measured tan δ is determined as tan δ when wet with water. The temperature of the water is 30°C.

<Wet grip performance>

The test tire is mounted on every wheel of a front-engine, front-wheel-drive car of 2,000 cc displacement made in Japan. Twenty test drivers independently drive the car 10 rounds on a course with a wet road surface, and the drivers rate the braking performance in a wet road surface region on a scale of one to five. A higher rating indicates better braking performance. The sum of the ratings of the twenty drivers is calculated and expressed as an index relative to the sum in the reference comparative example taken as 100. A higher index indicates better wet grip performance.

[Table 1]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Tread (cap layer) formulation (parts by mass) | SBR 1 | 100 | | | | 100 | 100 | | |
| | SBR 2 | | 41 | 41 | 41 | | | 41 | 41 |
| | NR | | 45 | 45 | 45 | | | 45 | 45 |
| | BR | | 14 | 14 | 14 | | | 14 | 14 |
| | Carbon black | | 6 | 6 | 6 | | | 6 | 6 |
| | Silica | 50 | 90 | 90 | 90 | 50 | 50 | 90 | 90 |
| | Silane coupling agent | 4.0 | 7.2 | 7.2 | 7.2 | 4.0 | 4.0 | 7.2 | 7.2 |
| | Oil | | 22.5 | 22.5 | 22.5 | | | 22.5 | 22.5 |
| | Gum rosin | | | | | | 20 | | 20 |
| | Modified resin A | 20 | 20 | 40 | 10 | | | | |
| | Zinc oxide | 2.2 | 2.2 | 2.2 | 2.2 | 2.2 | 2.2 | 2.2 | 2.2 |
| | Wax | | 2.2 | 2.2 | 2.2 | | | 2.2 | 2.2 |
| | Antioxidant | | 2.1 | 2.1 | 2.1 | | | 2.1 | 2.1 |
| | Sulfur | 1.4 | 0.7 | 0.7 | 0.7 | 1.4 | 1.4 | 0.7 | 0.7 |
| | Vulcanization accelerator 1 | 2.4 | 2.4 | 2.4 | 2.4 | 2.4 | 2.4 | 2.4 | 2.4 |
| | Vulcanization accelerator 2 | 2.2 | 2.2 | 2.2 | 2.2 | 2.2 | 2.2 | 2.2 | 2.2 |
| Specification/Evaluation | Fc | 50 | 96 | 96 | 96 | 50 | 50 | 96 | 96 |
| | tan δ when dry | 0.171 | 0.275 | 0.347 | 0.232 | 0.142 | 0.249 | 0.246 | 0.303 |
| | tan δ when wet with water | 0.223 | 0.319 | 0.427 | 0.265 | 0.159 | 0.218 | 0.258 | 0.343 |
| | tan δ when wet with water/tan δ when dry | 1.30 | 1.16 | 1.23 | 1.14 | 1.12 | 0.88 | 1.05 | 1.13 |
| | Wet grip performance | 116 | 104 | 110 | 102 | 100 | 79 | 94 | 101 |

The present invention (1) relates to a rubber composition, containing: boron; a rubber component; and a filler,

the rubber composition satisfying the following relationships (1) and (2):

$$(1)\ Fc > 40$$

wherein Fc refers to a filler content (parts by mass) per 100 parts by mass of the rubber component, (2) tan δ when wet with water/tan δ when dry > 1.00 wherein tan δ refers to a loss tangent measured at a temperature of 30°C, an initial strain of 10%, a dynamic strain of 20, and a frequency of 10 Hz in an elongation mode.

The present invention (2) relates to the rubber composition according to the present invention (1), further containing a modified resin that has been modified with a phenylboronic acid compound represented by the following formula (i):

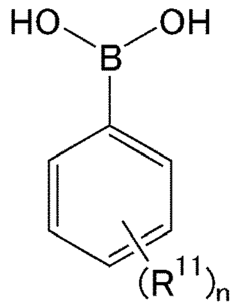

(i)

wherein $R^{11}$(s) may be the same or different and independently represent an optionally substituted monovalent hydrocarbon group which may contain a heteroatom, and n represents an integer of 1 to 5.

The present invention (3) relates to the rubber composition according to the present invention (2), wherein the modified resin is a modified rosin resin obtained by modifying a rosin resin with the phenylboronic acid compound represented by the formula (i).

The present invention (4) relates to the rubber composition according to any combination of the present inventions (1) to (3), which satisfies the following relationship:

$$Fc > 60$$

wherein Fc refers to a filler content (parts by mass) per 100 parts by mass of the rubber component.

The present invention (5) relates to the rubber composition according to any combination of the present inventions (1) to (3), which satisfies the following relationship:

$$Fc > 80$$

wherein Fc refers to a filler content (parts by mass) per 100 parts by mass of the rubber component.

The present invention (6) relates to the rubber composition according to any combination of the present inventions (1) to (5), which satisfies the following relationship:

tan δ when wet with water/tan δ when dry > 1.20
wherein tan δ refers to a loss tangent measured at a temperature of 30°C, an initial strain of 10%, a dynamic strain of 20, and a frequency of 10 Hz in an elongation mode.

The present invention (7) relates to the rubber composition according to any combination of the present inventions (1) to (5), which satisfies the following relationship:

tan δ when wet with water/tan δ when dry > 1.25
wherein tan δ refers to a loss tangent measured at a temperature of 30°C, an initial strain of 10%, a dynamic strain of 20, and a frequency of 10 Hz in an elongation mode.

The present invention (8) relates to the rubber composition according to any combination of the present inventions (1) to (7), which satisfies the following relationship:

tan δ when dry > 0.120
wherein tan δ refers to a loss tangent measured at a temperature of 30°C, an initial strain of 10%, a dynamic strain of 20, and a frequency of 10 Hz in an elongation mode.

The present invention (9) relates to the rubber composition according to any combination of the present inventions (1) to (8), which satisfies the following relationship:

tan δ when dry > 0.180
wherein tan δ refers to a loss tangent measured at a temperature of 30°C, an initial strain of 10%, a dynamic strain of 20, and a frequency of 10 Hz in an elongation mode.

The present invention (10) relates to a tire including a tread including the rubber composition according to any combination of the present inventions (1) to (9).

### Claims

**1.** A rubber composition, comprising:

boron;
a rubber component; and
a filler,
the rubber composition satisfying the following relationships (1) and (2):

$$(1)\ Fc > 40$$

wherein Fc refers to a filler content (parts by mass) per 100 parts by mass of the rubber component,
(2) tan δ when wet with water/tan δ when dry > 1.00 wherein tan δ refers to a loss tangent measured at a temperature of 30°C, an initial strain of 10%, a dynamic strain of 20, and a frequency of 10 Hz in an elongation mode.

**2.** The rubber composition according to claim 1, further comprising a modified resin that has been modified with a phenylboronic acid compound represented by the following formula (i):

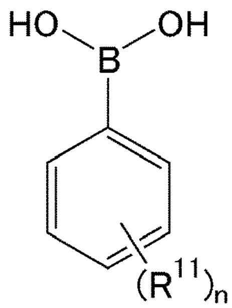

(i)

wherein $R^{11}$(s) may be the same or different and independently represent an optionally substituted monovalent hydrocarbon group which may contain a heteroatom, and n represents an integer of 1 to 5.

**3.** The rubber composition according to claim 2,
wherein the modified resin is a modified rosin resin obtained by modifying a rosin resin with the phenylboronic acid compound represented by the formula (i).

**4.** The rubber composition according to any one of claims 1 to 3, which satisfies the following relationship:

$$Fc > 60$$

wherein Fc refers to a filler content (parts by mass) per 100 parts by mass of the rubber component.

**5.** The rubber composition according to any one of claims 1 to 3, which satisfies the following relationship:

$$Fc > 80$$

wherein Fc refers to a filler content (parts by mass) per 100 parts by mass of the rubber component.

**6.** The rubber composition according to any one of claims 1 to 5, which satisfies the following relationship:

tan δ when wet with water/tan δ when dry > 1.20
wherein tan δ refers to a loss tangent measured at a temperature of 30°C, an initial strain of 10%, a dynamic strain of 20, and a frequency of 10 Hz in an elongation mode.

**7.** The rubber composition according to any one of claims 1 to 5, which satisfies the following relationship:

tan δ when wet with water/tan δ when dry > 1.25
wherein tan δ refers to a loss tangent measured at a temperature of 30°C, an initial strain of 10%, a dynamic strain of 20, and a frequency of 10 Hz in an elongation mode.

**8.** The rubber composition according to any one of claims 1 to 7, which satisfies the following relationship:

tan δ when dry > 0.120
wherein tan δ refers to a loss tangent measured at a temperature of 30°C, an initial strain of 10%, a dynamic strain of 20, and a frequency of 10 Hz in an elongation mode.

**9.** The rubber composition according to any one of claims 1 to 8, which satisfies the following relationship:

tan δ when dry > 0.180
wherein tan δ refers to a loss tangent measured at a temperature of 30°C, an initial strain of 10%, a dynamic strain of 20, and a frequency of 10 Hz in an elongation mode.

**10.** A tire comprising a tread including the rubber composition according to any one of claims 1 to 9.

FIG.1

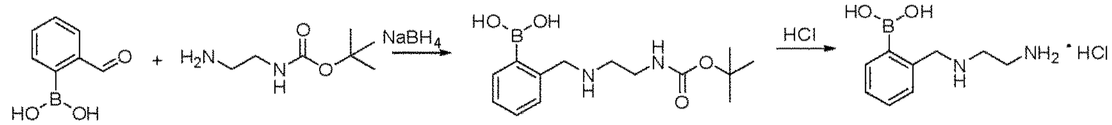


Phenylboronic acid compound B

Boc-protected phenylboronic acid compound C

Phenylboronic acid compound C

FIG.2

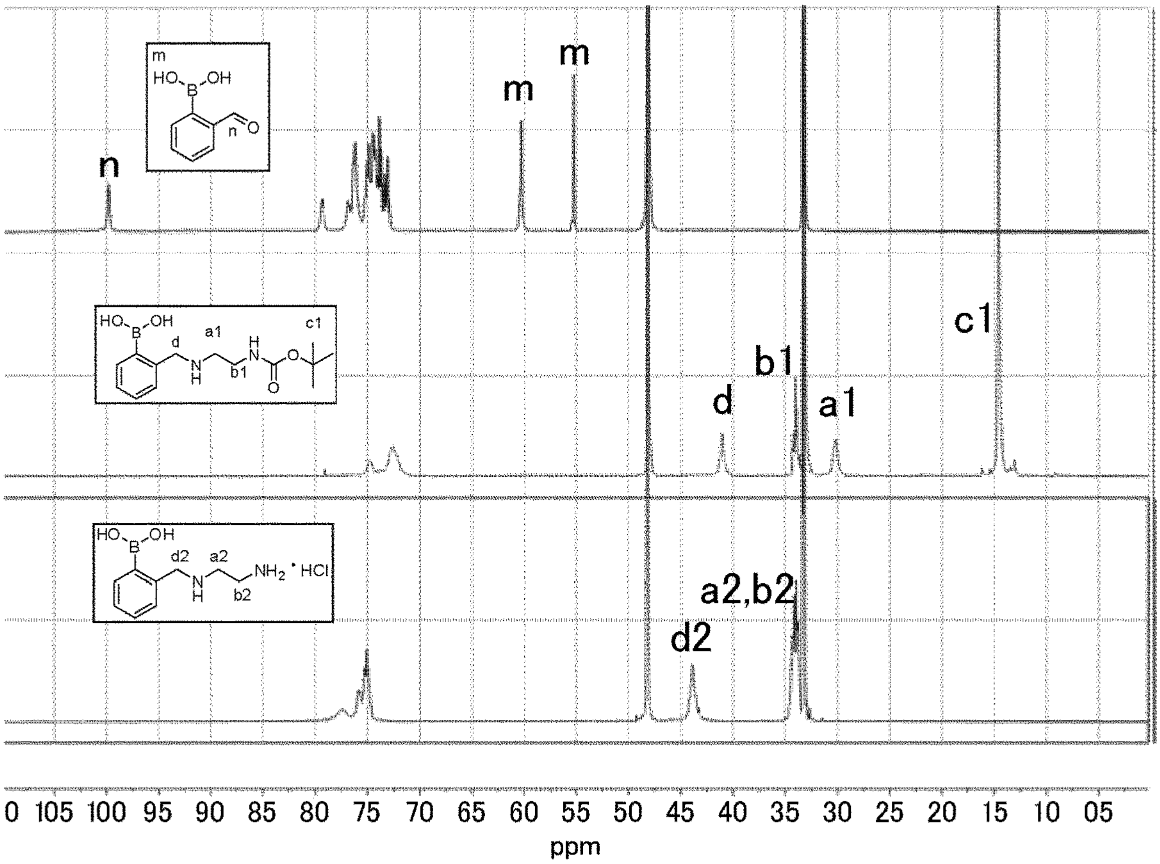


FIG.3

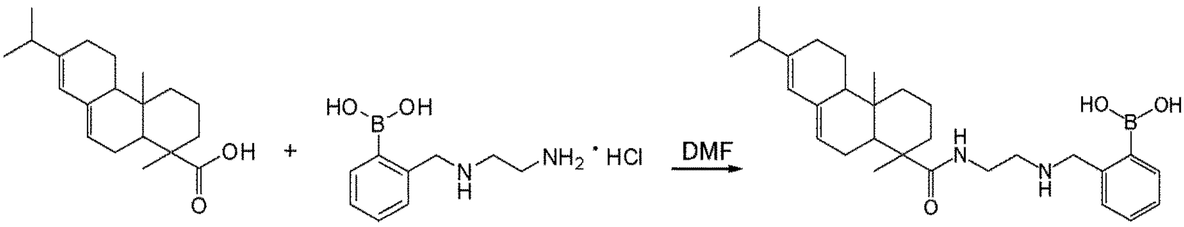


Gum rosin

Phenylboronic acid compound C

Modified resin A

FIG.4

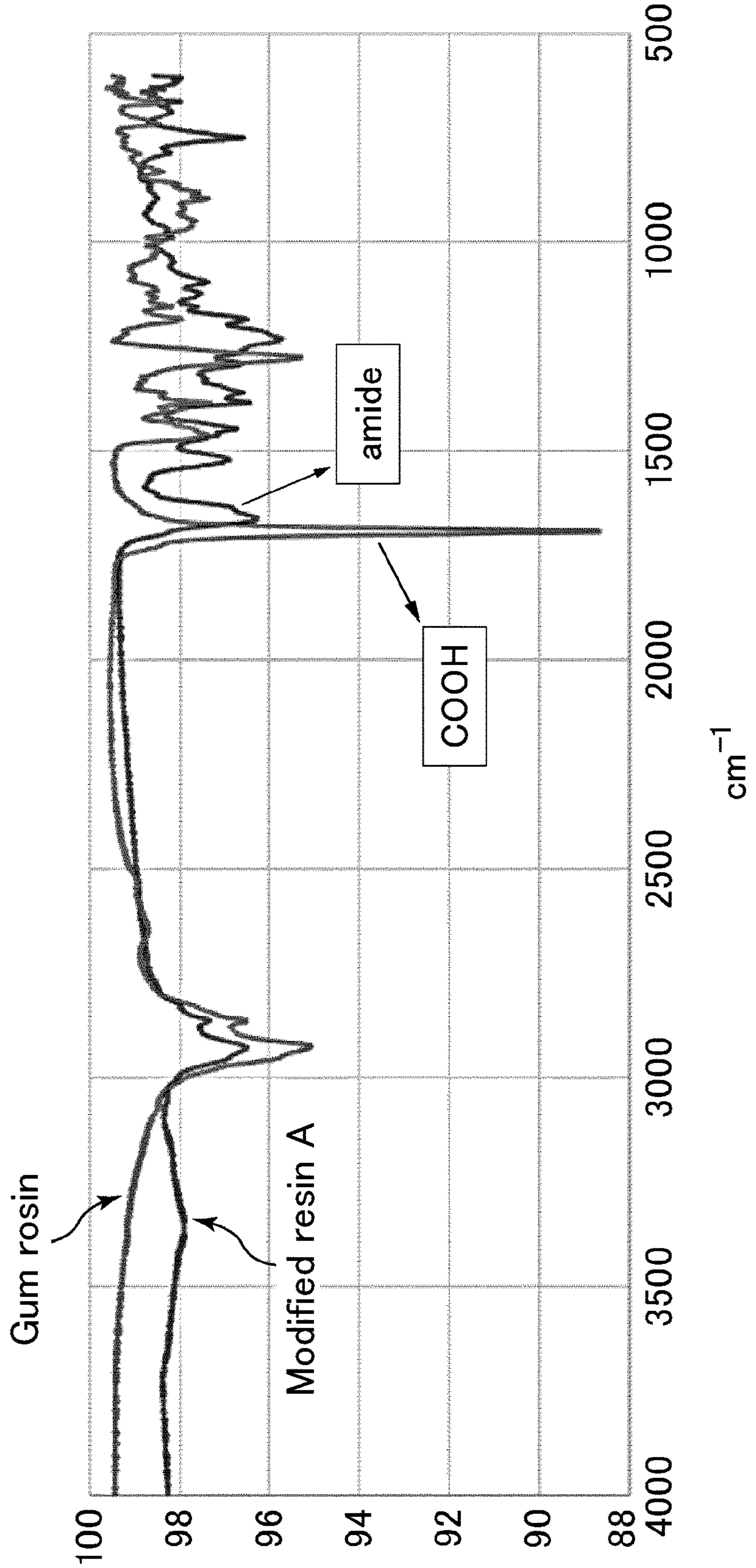
Gum rosin
Modified resin A
amide
COOH
100
98
96
94
92
90
88
4000
3500
3000
2500
2000
1500
1000
500
cm-1

Europäisches Patentamt
European Patent Office
Office européen des brevets

# EUROPEAN SEARCH REPORT

Application Number
EP 23 19 7979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | CN 105 254 943 B (CHINA PETROLEUM & CHEMICAL; BEIJING RES INST CHEM IND) 26 April 2017 (2017-04-26)<br>* claims 1,5,7 *<br>* paragraphs [0006], [0119] *<br>----- | 1,4-10<br><br><br>2,3 | INV.<br>C08L15/00<br>C08L7/00<br>C08L93/04<br>C08K5/55 |
| X<br><br>A | US 2015/337117 A1 (TANABE YUSUKE [JP]) 26 November 2015 (2015-11-26)<br>* claims *<br>* paragraphs [0006], [0038], [0046] *<br>* examples *<br>----- | 1,4-10<br><br>2,3 | |
| X<br><br>A | JP 5 565427 B2 (YOKOHAMA RUBBER CO LTD) 6 August 2014 (2014-08-06)<br>* claims *<br>* paragraphs [0005], [0007] *<br>* examples *<br>----- | 1,4-10<br><br>2,3 | |
| | | | TECHNICAL FIELDS SEARCHED (IPC) |
| | | | C08L<br>C08K |

The present search report has been drawn up for all claims

1

| Place of search | Date of completion of the search | Examiner |
|---|---|---|
| Munich | 25 January 2024 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 7979

This annex lists the patent family members relating to the patent documents cited in the above-mentioned European search report. The members are as contained in the European Patent Office EDP file on
The European Patent Office is in no way liable for these particulars which are merely given for the purpose of information.

25-01-2024

| Patent document cited in search report | Publication date | Patent family member(s) | Publication date |
|---|---|---|---|
| CN 105254943 B | 26-04-2017 | NONE | |
| US 2015337117 A1 | 26-11-2015 | CN 104220508 A | 17-12-2014 |
| | | DE 112013001702 T5 | 11-12-2014 |
| | | US 2015111985 A1 | 23-04-2015 |
| | | US 2015337117 A1 | 26-11-2015 |
| | | WO 2013141240 A1 | 26-09-2013 |
| JP 5565427 B2 | 06-08-2014 | JP 5565427 B2 | 06-08-2014 |
| | | JP 2013194109 A | 30-09-2013 |

EPO FORM P0459

For more details about this annex : see Official Journal of the European Patent Office, No. 12/82